(19) **Europäisches Patentamt / European Patent Office / Office européen des brevets**

(11) **EP 4 697 581 A1**

(12) **EUROPEAN PATENT APPLICATION**

(43) Date of publication:
18.02.2026 Bulletin 2026/08

(51) International Patent Classification (IPC):
*H02M 3/335* (2006.01)     *H02M 1/00* (2006.01)
*H02M 3/158* (2006.01)

(21) Application number: 25195461.6

(22) Date of filing: 12.08.2025

(52) Cooperative Patent Classification (CPC):
H02M 3/33573; H02M 1/0064; H02M 3/158

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 15.08.2024 US 202418805758

(71) Applicant: Bel Fuse (Macao Commercial
Offshore) Limited
Macau (MO)

(72) Inventors:
• WANG, Jifei
  Hangzhou 310053 (CN)
• LU, Hongliang
  Hangzhou 310053 (CN)

(74) Representative: Page White Farrer
Bedford House
21a John Street
London WC1N 2BF (GB)

(54)   **NON-ISOLATED FULL BRIDGE DC-DC CONVERTER**

(57)   A non-isolated converter includes a transformer having a primary winding and a secondary winding, a primary-side inverter, a secondary-side rectifier, and an output filter. The primary-side inverter is a full-bridge inverter providing two conduction paths for primary current during ON intervals of a switching cycle. The conduction paths are connected at a low-side common connection directly connected to the output side of the secondary winding, to provide the converter output current as the sum of the primary current and the secondary current during the ON intervals. Because the converter output includes a contribution from primary-side current due to the direct connection, certain advantages may be realized such as reduced primary-winding area/losses and reduced losses in the secondary-side rectifier.

**Fig. 1**

EP 4 697 581 A1

## Description

BACKGROUND

The invention is related to the field of DC-DC switching converters.

SUMMARY

A disclosed non-isolated converter includes a transformer having a primary winding and a secondary winding, a primary-side inverter for switched conduction of primary current from a converter input through the primary winding, a secondary-side rectifier for switched conduction of secondary current through the secondary winding to a converter output, and an output filter connected to an output side of the secondary winding for filtering converter output current to reduce a switching-related AC component of converter output. The primary-side inverter is a full-bridge inverter providing two conduction paths for the primary current during respective ON intervals of a switching cycle, wherein the conduction paths are connected together at a low-side common connection directly connected to the output side of the secondary winding to provide the converter output current as the sum of the primary current and the secondary current during the ON intervals of the switching cycle. Because the converter output includes a contribution from primary-side current due to the direct connection, certain advantages may be realized such as reduced primary-winding area/losses and reduced losses in the secondary-side rectifier.

BRIEF DESCRIPTION OF THE DRAWINGS

The foregoing and other objects, features and advantages will be apparent from the following description of embodiments of the invention, as illustrated in the accompanying drawings in which like reference characters refer to the same parts throughout the different views.

Figure 1 is a schematic diagram of a non-isolated full bridge converter;
Figure 2 is a schematic diagram of the non-isolated full bridge converter showing switch states and current conduction in a first ON interval of operation;
Figure 3 is a schematic diagram of the non-isolated full bridge converter showing switch states and current conduction in an OFF interval of operation;
Figure 4 is a schematic diagram of the non-isolated full bridge converter showing switch states and current conduction in a second ON interval of operation;
Figure 5 is a waveform diagram depicting switch states and current conduction of the non-isolated full bridge converter throughout a full switching cycle of operation;
Figure 6 is a schematic diagram of a second non-isolated full bridge converter employing a primary side blocking capacitor.

DETAILED DESCRIPTION

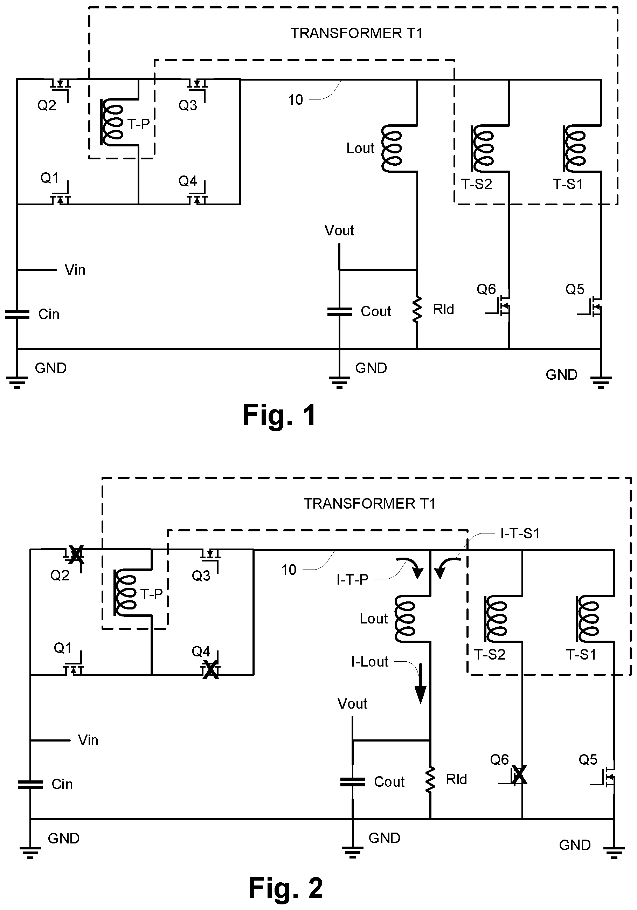

Figure 1 shows a non-isolated full bridge converter that includes a transformer T1, primary-side switches Q1-Q4 in full bridge configuration, secondary-side switches Q5-Q6, and other components including capacitors Cin, Cout, inductor Lout, and a representation of load as a load resistor Rld. The transformer T1 has a primary winding T-P and two secondary windings T-S1, T-S2. Both the primary-side circuitry and secondary-side circuitry are connected to a single shared ground GND. This common ground connection between the primary-side circuitry and the secondary-side circuitry establishes the "non-isolated" aspect of the arrangement. It will be understood that the transistors Q1-Q6 have their gates connected to respective switching control signals from separate control circuitry which, although not explicitly shown, will be understood by those skilled in the art to have structure and function to realize operation as described fully below.

More specifically:

1. A primary bridge comprises Q1, Q2, Q3, Q4, where the drains of Q1 and Q4 are connected together and connected to Vin source; the source of Q1 is connected to the drain of Q4 and connected to one end of the primary winding T-P of transformer T1; the source of Q2 is connected to the drain of Q3 and connected to the other end of the primary winding T-P of transformer T1; and the sources of Q3 and Q4 are connected together;
2. The transformer T1 has primary winding T-P and secondary windings T-S1, T-S2, with the windings T-P, T-S1, and T-S2 being fully coupled to each other;
3. Output rectifier circuit includes Q5 and Q6, where Q5 is in series with T-S1, and Q6 is in series with Q6;
4. The source nodes of Q3 and Q4 are tied together and connected (via connection 10) to the output inductor Lout and the secondary center tap between T-S1 and T-S2;
5. The output filter includes the inductor Lout and capacitor Cout;
6. The number of turns of the primary winding T-P is Np, and the number of turns of the secondary windings T-S1 and T-S2 are equal and identified as Ns.

Regarding #4 above, this arrangement is also referred to herein as having the two primary-side conduction paths having a low-side common connection (Q3-Q4 connection point) that is directly connected to the output side of the secondary winding (center tap of T-S1, T-S2 in this embodiment).

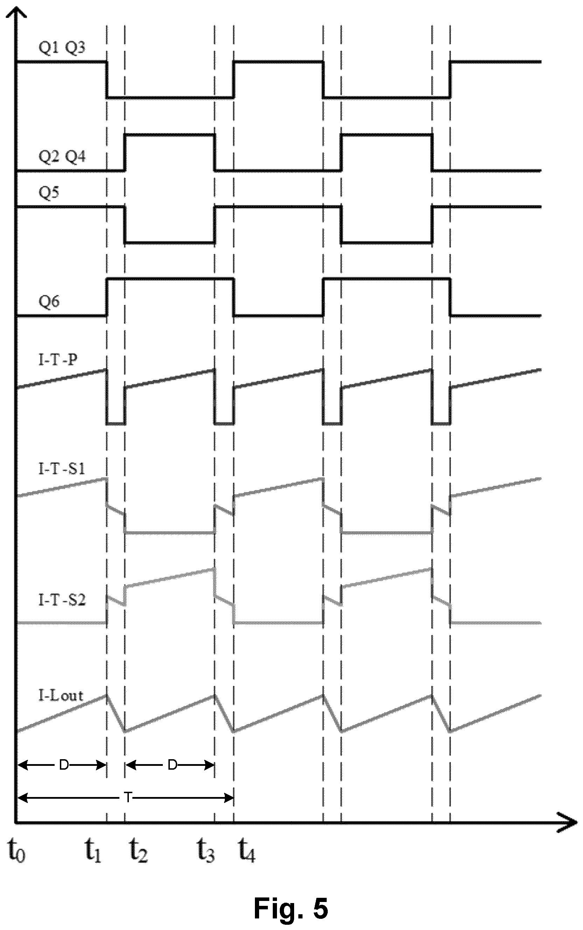

Operation is described with reference to the annotated circuit diagrams of Figures 2 - 4 and the waveform diagram of Figure 5. Referring to Figure 5, overall operation is an ongoing series of switching cycles at regular intervals of duration T corresponding to a switching frequency, which may be in the range 10 - 100 kHz for example. Each cycle is divided into periods or intervals demarcated by times shown as t0, t1, t2, t3 and t4. For ease of reference herein, the periods t0-t1 and t2-t3 are referred to as ON intervals (of duration D), referring to conduction of primary-side current, and the periods t1-t2 and t3-t4 are referred to as OFF intervals (of duration T-D), referring to the non-conduction of primary-side current.

Figure 2 shows operation in the first ON interval t0-t1. The switches Q1, Q3, and Q5 are turned on, and switches Q2, Q4, and Q6 are turned off (indicated by the large X on these components in Figure 2). The voltage of Vin drops in the windings T-P and T-S1. The voltage drop on T-P is Vin*Np/(Np+Ns), and voltage drop on T-S1 is Vin*Ns/(Np+Ns). The primary-side current I-T-P is Ns*I-T-S1/Np, and the output current I-Lout is equal to the sum I-T-P + I-T-S1. Thus, due to the connection 10, the input current I-T-P flows to the output through the output filter.

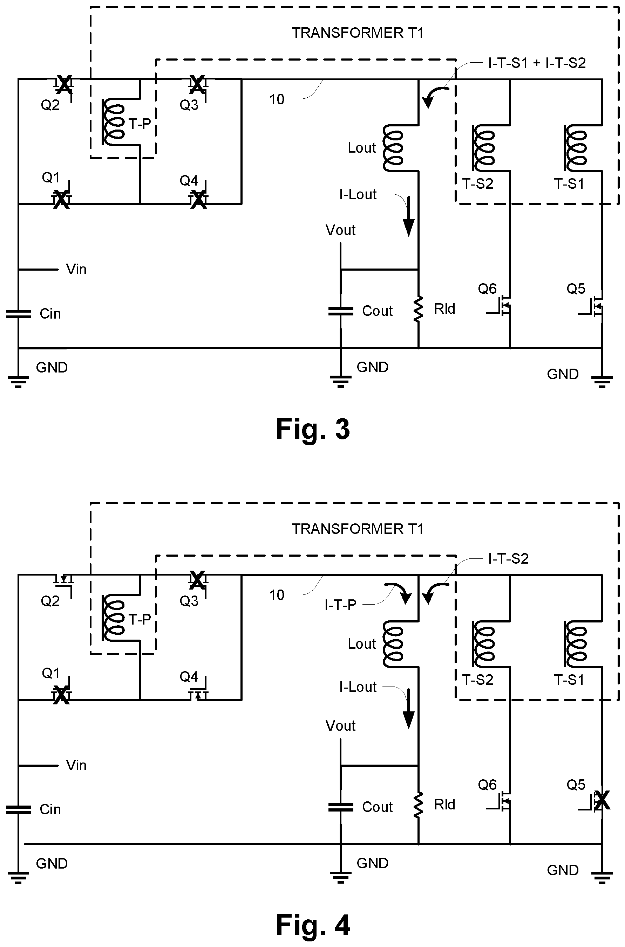

Figure 3 shows operation during an OFF interval t1-t2. All primary-side switches Q1, Q2, Q3, Q4 are turned off, and both secondary-side switches Q5, Q6 are turned on. The volage drop on T-P, T-S1, T-S2 are all zero. The output current I-Lout is the sum of the two secondary winding currents, I-T-S1 + I-T-S2.

Figure 4 shows operation in the second ON interval t2-t3. The switches Q1, Q3, and Q5 are turned off, and switches Q2, Q4, and Q6 are turned on. The voltage of Vin drops in the windings T-P and T-S2. The voltage drop on T-P is Vin*Np/(Np+Ns), and voltage drop on T-S2 is Vin*Ns/(Np+Ns). The primary-side current I-T-P is Ns*I-T-S2/Np, and the output current I-Lout is equal to the sum I-T-P + I-T-S2. Thus, due to the connection 10, the input current I-T-P flows to the output through the output filter.

The interval t3-t4 is a second OFF interval which is the same as the OFF interval t1-t2 illustrated in Figure 3. All primary-side switches Q1, Q2, Q3, Q4 are turned off, and both secondary-side switches Q5, Q6 are turned on. The volage drop on T-P, T-S1, T-S2 are all zero. The output current I-Lout is the sum of the two secondary winding currents, I-T-S1 + I-T-S2.

Using conventional notation to describe the cycle interval (t0 to t4) as T and the ON-interval duration (each of t0-t1 and t2-t3) as D, then the converter output voltage Vout is given by:

$$Vout = Vin * 2D * Ns/(Np+Ns)T$$

One important aspect is that, compared to a conventional isolated converter providing the same output voltage, the non-isolated converter requires fewer primary-side winding turns Np. For example, based on a given duty cycle D, if a conventional isolated design has a turns ratio Np/Ns = 4, the equivalent non-isolated design can use a reduced turns ratio Np/Ns = 3, i.e., a reduced number of primary winding turns. The reduced turns of the primary winding can enable the use of fewer printed circuit board (PCB) layers and less copper loss for windings which can result in lower cost and higher efficiency.

Additionally, in a conventional isolated converter, the output-side rectifier circuit needs to deliver all the output current which is carried through the secondary windings and rectifier switch components, with power loss being proportional to the square of root-mean-square (RMS) current. In the proposed non-isolated converter circuit, because the input current flows into the output, then the current flowing in the rectifier circuitry is the difference between the output current and the input current. For a given output current, the non-isolated design has less current in the rectifier circuit and less power loss accordingly, providing higher efficiency.

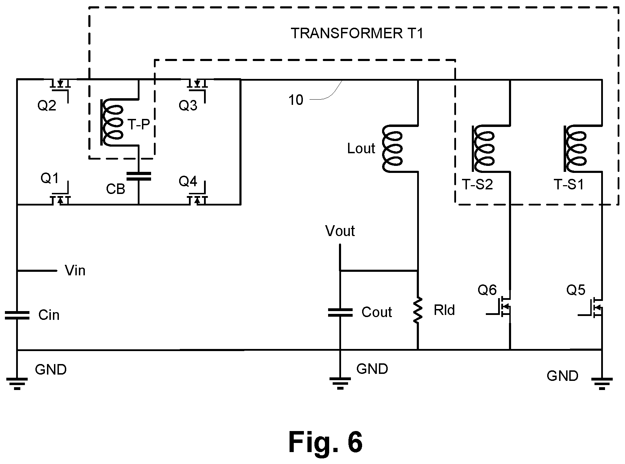

Figure 6 illustrates a converter circuit like that of Figures 1-4 while also including a primary-side capacitor CB used to prevent potential saturation of the core of T1 in case there is unbalance duty cycle for the two ON-intervals.

While various embodiments of the invention have been particularly shown and described, it will be understood by those skilled in the art that various changes in form and details may be made therein without departing from the scope of the invention as defined by the appended claims.

**Claims**

1. A converter, comprising:

   a transformer having a primary winding and a secondary winding;
   a primary-side inverter for switched conduction of primary current from a converter input through the primary winding;
   a secondary-side rectifier for switched conduction of secondary current through the secondary winding to a converter output; and
   an output filter connected to an output side of the secondary winding for filtering converter output current to reduce a switching-related AC component thereof,
   wherein the primary-side inverter is a full-bridge inverter providing two conduction paths for the primary current during respective ON intervals of a switching cycle, the conduction paths connected together at a low-side common connection directly connected to the output side of the secondary winding to provide the converter output current as the sum of the primary current and the secondary current during the ON intervals of the switching cycle.

2. The converter of claim 1, wherein the secondary winding is a first secondary winding of a split secondary that also includes a second secondary winding, and wherein the secondary-side rectifier includes respective rectifier switches for the first and second secondary windings, the rectifier switches being switched on in respective ones of the ON intervals to conduct respective secondary-winding currents to the converter output.

3. The converter of any of the preceding claims, wherein the output filter includes:

> an output inductor in series between the output side of the secondary winding and the converter output; and
> an output capacitor in parallel with the converter output.

4. The converter of any of the preceding claims, wherein the primary-side inverter includes two pairs of transistors, each pair establishing a respective one of the conduction paths, each pair having a first transistor coupled between the converter input and a respective first terminal of the primary winding and a second transistor coupled between a respective second terminal of the primary winding and the low-side common connection.

Fig. 1

Fig. 2

TRANSFORMER T1

I-T-S1 + I-T-S2

Q2

T-P

Q3

10

Lout

T-S2

T-S1

Q1

Q4

I-Lout

Vout

Q6

Q5

Vin

Cin

Cout

Rld

GND

GND

GND

## Fig. 3

TRANSFORMER T1

I-T-S2

Q2

T-P

Q3

10

I-T-P

Q1

Q4

Lout

T-S2

T-S1

I-Lout

Vout

Q6

Q5

Vin

Cin

Cout

Rld

GND

GND

GND

## Fig. 4

**Fig. 5**

TRANSFORMER T1

Q2

T-P

Q3

10

Q1

CB

Q4

Lout

T-S2

T-S1

Vout

Vin

Q6

Q5

Cin

Cout

Rld

GND

GND

GND

# Fig. 6

Europäisches
Patentamt

European
Patent Office

Office européen
des brevets

# EUROPEAN SEARCH REPORT

**Application Number**

EP 25 19 5461

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAOCHENG HUANG ET AL: "Novel non-isolated LLC resonant converters", APPLIED POWER ELECTRONICS CONFERENCE AND EXPOSITION (APEC), 2012 TWENTY-SEVENTH ANNUAL IEEE, IEEE, 5 February 2012 (2012-02-05), pages 1373-1380, XP032127848, DOI: 10.1109/APEC.2012.6165999 ISBN: 978-1-4577-1215-9 * figure 1b * * figure 4 * * page 1374 * | 1-4 | INV. H02M3/335 H02M1/00 H02M3/158 |
| A | EP 3 972 106 A1 (FLEX LTD [SG]) 23 March 2022 (2022-03-23) * figure 2A * | 1-4 | |

| | | | TECHNICAL FIELDS SEARCHED (IPC) |
|---|---|---|---|
| | | | H02M |

The present search report has been drawn up for all claims

| Place of search | Date of completion of the search | Examiner |
|---|---|---|
| The Hague | 17 November 2025 | Riehl, Philippe |

## EP 4 697 581 A1

### ANNEX TO THE EUROPEAN SEARCH REPORT
### ON EUROPEAN PATENT APPLICATION NO.

EP 25 19 5461

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2025

| Patent document cited in search report | | Publication date | Patent family member(s) | | Publication date |
|---|---|---|---|---|---|
| EP 3972106 | A1 | 23-03-2022 | CN | 114257094 A | 29-03-2022 |
| | | | EP | 3972106 A1 | 23-03-2022 |
| | | | JP | 2022051706 A | 01-04-2022 |
| | | | US | 2022094276 A1 | 24-03-2022 |

For more details about this annex : see Official Journal of the European Patent Office, No. 12/82